# EUROPÄISCHE PATENTSCHRIFT

(11) **EP 2 133 764 B1**
(45) Veröffentlichungstag und Bekanntmachung des Hinweises auf die Patenterteilung: **17.10.2012**
(21) Anmeldenummer: 08010462.3
(22) Anmeldetag: 09.06.2008
(51) Int. Cl.: G05B 19/05, G05B 19/042

(54) **Fehlersicheres Automatisierungssystem und Verfahren**
Error-proof automation system and method
Système d'automatisation à sécurité intrinsèque et procédé

(43) Veröffentlichungstag der Anmeldung: 16.12.2009
(73) Patentinhaber: SIEMENS AKTIENGESELLSCHAFT, 80333 München (DE)
(72) Erfinder: Mattes, Rainer, 54349 Trittenheim (DE); Weber, Uwe, 90542 Eckental (DE)

(56) Entgegenhaltungen:
- EP-A- 1 857 936
- WO-A-2005/052703
- DE-A1- 3 740 290
- SYKORA M R: "THE DESIGN AND APPLICATION OF REDUNDANT PROGRAMMABLE CONTROLLERS" CONTROL ENGINEERING, REED BUSINESS INFORMATION, HIGHLANDS RANCH, CO, US, Bd. 29, Nr. 8, 1. Juli 1982 (1982-07-01), Seiten 77-79, XP002057993 ISSN: 0010-8049

## Beschreibung

Die Erfindung betrifft ein fehlersicheres Automatisierungssystem umfassend eine erste Recheneinheit, eine zweite Recheneinheit, ein erstes Schnittstellenmodul, ein zweites Schnittstellenmodul und eine Peripherie, wobei die erste Recheneinheit zum Datenaustausch eines ersten Telegramms mit dem ersten Schnittstellenmodul in Verbindung steht und die zweite Recheneinheit zum Datenaustausch eines zweites Telegramms mit dem zweiten Schnittstellenmodul in Verbindung steht.

Des Weiteren betrifft die Erfindung ein Verfahren zur sicherheitsgerichteten Übertragung von Daten, wobei mit einer ersten Recheneinheit ein erstes Telegramm an ein erstes Schnittstellenmodul übertragen wird und mit einer zweiten Recheneinheit ein zweites Telegramm an ein zweites Schnittstellenmodul übertragen wird.

Fehlersichere Automatisierungssysteme, nachfolgend auch F-Systeme genannt, sind vorzugsweise zum Erreichen eines Safety Integrity Level 3 (SIL 3) nach IEC 61508 ausgestaltet. Bekannte F-Systeme sind durch eine einkanalige Hardware auf der Seite der Recheneinheit realisiert. Um einen Sicherheitslevel von SIL 3 zu erreichen, werden u.a. Diversitätseigenschaften der den Recheneinheiten zugrunde liegenden CPUen ausgenutzt, z.B. wird eine Operation über eine Bit-Verknüpfung in einem ersten Rechenwerk und eine dazu diversitäre Wort-Verknüpfung in einem anderen Rechenwerk durchgeführt. Das erste Rechenwerk könnte dabei eine ALU (Arithmetic Logical Unit) sein und das andere Rechenwerk könnte ein Word-Prozessor sein. Dies bedeutet aber eine Abhängigkeit von bestimmten Prozessortypen. In zukünftigen Automatisierungseinrichtungen ist es jedoch wünschenswert, beliebige Controller/Prozessoren, wie z.B. RISC-Prozessoren einzusetzen. Bei dieser Art von Prozessoren ist es allerdings sehr aufwendig, die geforderten Diversitätseigenschaften nachzuweisen.

Zum Erreichen einer Zulassung für den Sicherheitslevel SIL 3 wurde bisher auf diversitäre Rechenwerke in einer CPU und/oder auf codierte Operationen, wie das sogenannte "Coded-Processing" verwiesen. Für ein Automatisierungsgeräte mit diversitären Rechenwerken wurde für eine Zertifizierung für den Sicherheitslevel SIL 3 das komplette Betriebssystem der fehlersicheren CPU des Automatisierungsgerätes zertifiziert. D.h. für F-Systeme, welche auf redundanter Hardware basieren, wurde für eine Zertifizierung das komplette Betriebssystem von den zugehörigen fehlersicheren CPUs zertifiziert. Da die Betriebssysteme früher weniger komplex waren konnte dies noch mit einem vertretbaren Aufwand realisiert werden. Aufgrund der Größe heutiger Betriebssysteme in zukünftigen Steuerungen für Automatisierungssysteme ist diese Art der Zertifizierung mit einem sehr hohen Aufwand verbunden und nicht wirtschaftlich.

Weiterhin ist es bei F-Systemen nach dem Stand der Technik von Nachteil, dass für den Benutzer ein eingeschränkter Funktionsumfang für die Programmierung solcher F-Systeme vorliegt, und dass die Systeme in ihrer Leistungsfähigkeit eingeschränkt sind. Derartige Einschränkungen kommen beispielsweise daher, dass wegen der Fehlersicherheit codierte und uncodierte Daten verarbeitet werden müssen, um dies zu erreichen werden dem Anwender des F-Systems zur Programmierung spezielle Funktionsbausteine zur Verfügung gestellt bzw. zusätzlicher Code generiert, welches die Leistungsfähigkeit eines F-Systems einschränkt.

Der Erfindung liegt die Aufgabe zugrunde ein leistungsfähigeres fehlersicheres Automatisierungssystem zur Verfügung zu stellen.

Diese Aufgabe wird durch die Ansprüche 1 und 5 gelöst. Weiterbildungen werden in den Unteransprüchen 2-4 und 6, 7 beschrieben. Mit derartigen fehlersicheren Automatisierungssystemen können nun die Sicherheitsanforderungen nach IEC 61508 (SIL3) durch vorzugsweise eine Hardware-Redundanz erreicht werden. Somit sind keine zusätzlichen Anforderungen bezüglich einer Datensicherung und einer Datenverarbeitung in den CPU's der Recheneinheiten zu berücksichtigen, da Erstfehler sofort aufgedeckt werden. Unter Erstfehler sind Fehler zu verstehen, welche sich nicht unmittelbar auswirken. Erst wenn ein weiterer Fehler auftritt, der sogenannte Zweitfehler, kann eine Schutzfunktion reagieren. Dies ermöglicht es Standard-CPU's einzusetzen. Eine Überprüfung der Daten erfolgt in den Schnittstellenmodulen, welche beispielsweise als Kopfbaugruppen einer dezentralen Peripherie eingesetzt werden. Die beiden Kopfbaugruppen, also das erste Schnittstellenmodul und das zweite Schnittstellenmodul werden vorzugsweise als eine Einheit angesehen. Nun besteht die Möglichkeit, dass in der Einheit der Kopfbaugruppen die von der ersten Recheneinheit gesendeten Daten und die von der zweiten Recheneinheit gesendeten Daten zu vergleichen. In den beiden Recheneinheiten, welche jeweils je ein Automatisierungsgerät repräsentieren, läuft zur Erfüllung der Sicherheitsanforderungen in jeder Recheneinheit ein Programm zur Erledigung der gleichen Aufgaben ab. Die beiden Automatisierungsgeräte liefern also getrennt voneinander jeweils das gleiche Ergebnis. Bei einer Unstimmigkeit der Ergebnisse, welche sich durch die Daten widerspiegeln, kann auf einen Fehler geschlossen werden und die Peripherie daraufhin in einen sicheren Zustand versetzt werden. Die Überwachungsfunktionen, welche zuvor in den Recheneinheiten implementiert waren und die Recheneinheiten durch diese Implementation Performance-Einbußen hinnehmen mussten, ist erfindungsgemäß in die Schnittstellenmodule und in die F-Peripherie verlagert worden. Die Telegramme sind dabei vorzugsweise gemäß Profisafe V2-Mode zu generieren.

Erfindungsgemäß weist das erste Schnittstellenmodul erste Mittel zum Bilden eines Prüfwertes für das dritte Telegramm auf. Ein Prüfwert ist vorzugsweise ein CRC-Prüfwert, welcher aufgrund eines CRC-Generatorpolynoms erzeugt wurde.

In weiterer vorteilhafter Ausgestaltung sind das erste und das zweite Schnittstellenmodul auf einem Baugruppenträger angeordnet. Ein Aufbau als Kompaktgerät ist ebenfalls denkbar oder auch eine Vernetzung von örtlich getrennten Komponenten über einen Feldbus.

Vorzugsweise sind die Recheneinheiten über einen Feldbus mit den Schnittstellenmodulen verbunden. Weiterhin ist es hier vorteilhaft, dass zur weiteren Abgleichung der Telegrammdaten beispielsweise gegen Verfälschung, falscher Abfolge, Überholung, Verlust usw. ein Profisafe-Treiber verwendet wird, welcher vorteilhaft in allen Kommunikationskomponenten integriert ist, also in der ersten und zweiten Recheneinheit, in den Schnittstellenmodulen und in der F-Periphrie.

Die eingangs genannte Aufgabe wird weiterhin durch ein Verfahren zur sicherheitsgerichteten Übertragung von Daten gelöst, wobei mit einer ersten Recheneinheit ein erstes Telegramm an ein erstes Schnittstellenmodul übertragen wird und mit einer zweiten Recheneinheit ein zweites Telegramm an ein zweites Schnittstellenmodul übertragen wird, wobei auf der ersten Recheneinheit eine erstes Programm und auf der zweiten Recheneinheit ein zweites Programm zum Bereitstellen von gleichen Daten in das erste bzw. in das zweite Telegramm abläuft, wobei die Daten in den funktionell miteinander wechselwirkenden Schnittstellenmodulen miteinander verglichen und bei einer bestimmbaren Gleichheit in einem dritten Telegramm zu einer Peripherie übertragen werden. Durch den Vergleich des ersten Telegramms mit dem zweiten Telegramm bzw. durch den Vergleich der in den Telegrammen enthaltenen Daten, ist sichergestellt, dass beide Recheneinheiten das gleiche Ergebnis geliefert haben und somit in den Recheneinheiten und in dem Übertragungsweg von den Recheneinheiten zu den Schnittstellenmodulen kein Fehler aufgetreten ist. Erfindungsgemäß wird die für das Erreichen einer Sicherheitsstufe erforderliche Hardware-Diversität durch eine Funktionalität der Schnittstellenmodule genutzt.

Um die Sicherheit vom sicherheitsgerichteten Systemen weiter zu erhöhen, wird mittels des ersten Schnittstellenmoduls ein Prüfwert in das dritte Telegramm geschrieben und mittels des zweiten Schnittstellenmoduls die Daten in das dritte Telegramm geschrieben.

Vorzugsweise werden verfahrensgemäß das erste und das zweite Programm jeweils zyklisch laufen.

Bei sicherheitsgerichteten Automatisierungssystemen, auf welchen das Verfahren vorzugsweise angewendet wird, ist es von Vorteil bei Ungleichheit der Daten die Peripherie in einen sicheren Zustand zu schalten. Wurden Unterschiede in den Telegrammen oder in den Daten festgestellt, so erhält die Peripherie keine Daten mehr und wird, beispielsweise aufgrund von Profi-Safe Mechanismen, insbesondere einem Watchdog, in einen sicheren Zustand überführt.

Weitere vorteilhafte Ausführungsformen der Erfindung und die damit verbundenen Vorteile werden nachfolgend am Beispiel der in den Figuren dargestellten Ausführungsbeispiele der Erfindung näher erläutert. Dabei zeigen:
- FIG 1: ein fehlersicheres Automatisierungssystem und

- FIG 2: das Zusammenstellen eines dritten Telegramms für eine Peripherie.

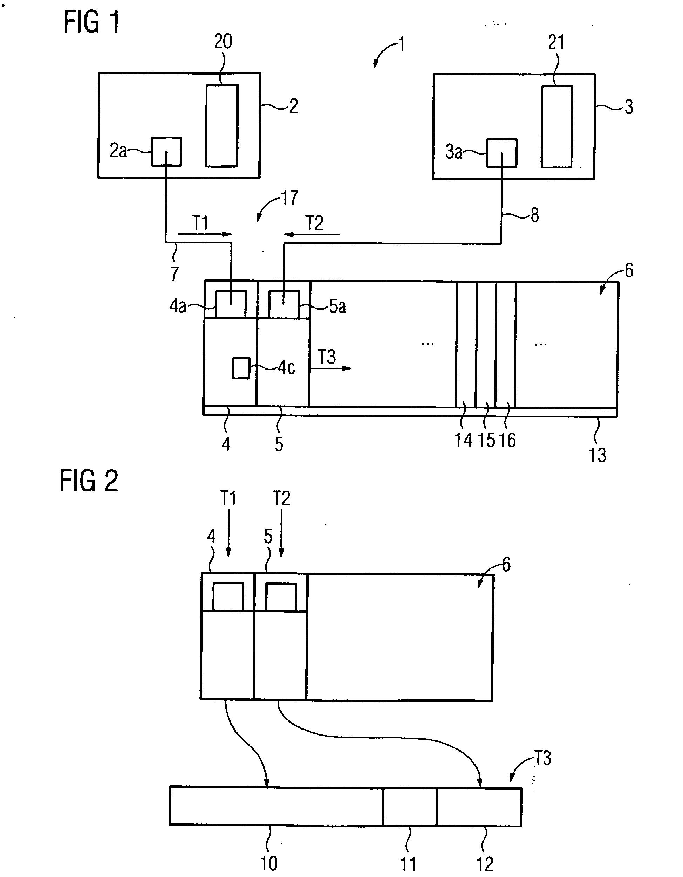

Gemäß FIG 1 ist ein fehlersicheres Automatisierungssystem 1 mit einer ersten Recheneinheit 2 und einer zweiten Recheneinheit 3 dargestellt. Die erste Recheneinheit 2 und die zweite Recheneinheit 3 laufen im Parallelbetrieb als redundante Recheneinheiten ohne eine Synchronisation. Auf beiden Recheneinheiten 2, 3 läuft jeweils das gleiche Automatisierungsprogramm ab. Ein erstes Programm 20 läuft auf der ersten Recheneinheit 2 ab, die Anweisungen und Codezeilen des ersten Programms 20 sind identisch mit einem zweiten Programm 21, welches auf der zweiten Recheneinheit 3 abläuft. Die Ergebnisse und Anweisungen, welche die Recheneinheiten 2, 3 bereitstellen, müssen also immer identisch sein. Für den Fall, dass nicht identische Ergebnisse oder Anweisungen vorliegen, muss ein Fehler vorliegen auf den reagiert werden kann.

Die erste Recheneinheit 2 erzeugt mit Hilfe des ersten Programms 20 ein erstes Telegramm T1. Dieses erste Telegramm T1 wird über einen ersten Busanschluss 2a der ersten Recheneinheit 2 mittels einer ersten Datenleitung 7 an einen dritten Busanschluss 4a eines ersten Schnittstellenmoduls 4 gesendet. Ebenfalls, nicht unbedingt zeitgleich, da die erste Recheneinheit 2 mit der zweiten Recheneinheit 3 nicht zwingend synchronisiert sein muss, wird durch das zweite Programm 21 über einen zweiten Busanschluss 3a und einer zweiten Datenleitung 8 ein zweites Telegramm T2 an einen vierten Busanschluss 5a eines zweiten Schnittstellenmoduls 5 geführt.

Das erste Telegramm T1 kann nun in dem ersten Schnittstellenmodul 4 und das zweite Telegramm T2 kann in dem zweiten Schnittstellenmodul 5 verarbeitet werden. Da die beiden Schnittstellenmodule 4 und 5 miteinander Wechselwirken wird ein Vergleich der beiden Telegramme T1 und T2 durchgeführt. Dieser Vergleich kann wahlweise in dem ersten Schnittstellenmodul 4 oder in dem zweiten Schnittstellenmodul 5 erfolgen. Das jeweilige nicht an den Vergleich beteiligte Schnittstellenmodul 4 oder 5 übergibt dann dementsprechend sein Telegramm an das erste bzw. an das zweite Schnittstellenmodul.

Nur wenn eine Gleichheit zwischen dem ersten Telegramm T1 und dem zweiten Telegramm T2 bzw. zwischen deren Dateninhalten festgestellt wurde, wird durch das erste Schnittstellenmodul 4 und das zweite Schnittstellenmodul 5 ein drittes Telegramm T3 gebildet. Diese Telegrammbildung des dritten Telegramms T3 ist in FIG 2 näher beschrieben. Im Falle der Ungleichheit wird kein drittes Telegramm T3 für eine nachfolgende Peripherie 6 bereitgestellt.

Andeutungsweise besteht die Peripherie 6 aus einem ersten Peripheriemodul 14, einem zweiten Peripheriemodul 15 und einem dritten Peripheriemodul 16, welcher allesamt in einem Baugruppenträger 13 angeordnet sind. Die Peripheriemodule 14, 15, 16 stehen über einen nicht dargestellten Rückwandbus des Baugruppenträgers 13 mit dem ersten und dem zweiten Schnittstellenmodul 4, 5 in Verbindung.

Gemäß FIG 2 ist verdeutlicht wie über das erste Schnittstellenmodul 4, welches das erste Telegramm T1 empfängt, und über das zweite Schnittstellenmodul 5, welches das zweite Telegramm T2 empfängt, das dritte Telegramm T3 zusammengestellt wird. Das erste Schnittstellenmodul 4 stellt dabei die Daten 10 für das dritte Telegramm T3 bereit. Das zweite Schnittstellenmodul 5 nimmt einen Prüfwert 12 aus dem zweiten Telegramm und stellt ihn für das dritte Telegramm T3 bereit. Weiterhin wird das dritte Telegramm T3 mit einer fortlaufenden Nummer 11 angereichert. Diese Zusammenstellung mit den Daten 10 dem Prüfwert 12 dient der notwendigen Fehlersicherheit und muss sich gemäß Profisafe V2-Mode verhalten.

### Erfindungsgemäß sind folgende Vorteile entstanden:

Das Automatisierungssystem 1 kann hardwareunabhängig aufgebaut werden. Aufwendige Untersuchungen der verwendeten Recheneinheiten 2, 3 auf Diversitätseigenschaften können entfallen. Es ist eine freie Wahl der Erstellsprache für die in den Recheneinheiten 2, 3 ablaufenden Anwenderprogrammen, hier das erste Programm 20 und das zweite Programm 21, gewährleistet. Ein Anwender kann einen vollen Befehlsumfang der ersten und zweiten Recheneinheit 2, 3 nutzen. Er kann das Automatisierungssystem 1 von Seiten der Programmierung so einsetzen wie er es von Automatisierungssystemen für einen nicht sicherheitsgerichteten Betrieb gewohnt ist und muss nicht mit speziellen Fehlersicherheits-Bibliotheken in den Programmen arbeiten. Der Anwender wird hinsichtlich der zur Verfügung stehenden Datentypen und Operationen nicht mehr eingeschränkt.

Ein zweiter Hardware-Timer, ein sogenannter fehlersicherer Timer, muss nicht in den Recheneinheiten 2, 3 implementiert sein. Eine komplexe Erstellungsumgebung für eine fehlersichere Software ist nicht mehr notwendig. Durch eine deutlich schnellere Abarbeitung des fehlersicheren Programms kann ein Performancegewinn und eine Laufzeitoptimierung erreicht werden.

Ein Wiedereingliederungsprozess der Busteilnehmer in einem Feldbus 17, wie in FIG 1 dargestellt, gestaltet sich gemäß Profisafe V2-Mode. Denn war beispielsweise das erste Schnittstellenmodul 4 vom Feldbus 17 getrennt, wird aus Sicherheitsgründen die Peripherie 6 passiv geschaltet oder es wird mit sicheren Ersatzwerten gearbeitet. Nachdem die Funktionsfähigkeit des ersten Schnittstellenmoduls 4 wieder hergestellt ist, muss kein besonderer Mechanismus vorgenommen werden, da erst wieder Daten 10 an die Peripherie 6 gesendet werden, wenn beide Recheneinheiten 2, 3 und somit beide Schnittstellenmodule 4, 5 die gleichen Daten empfangen.

Ein weiterer Vorteil ist es, das es mit dem erfindungsgemäßen System möglich ist, einen schnellen Not-Aus zu realisieren. Da nun in sogenannten Alarmprozeduren schnell und sicher auf externe Ereignisse reagiert werden kann, weil sich aufgrund des Performancegewinns die Programmlaufzeit der Recheneinheiten auf wenige Millisekunden reduzieren.

Vorteilhaft können mit dem erfindungsgemäßen Verfahren und dem Fehlersicheren Automatisierungssystem F-Systeme auf Basis redundanter Standard-SPS-Geräte für die Anforderung nach SIL 3 gemäß IEC 61508 ohne sicherheitsrelevante Zertifizierung der Hardware und der Firmware für die verwendeten Standard-SPS-Geräte aufgebaut und betrieben werden.

### Weitere für die Erfindung relevante Überlegungen sind:

Bei einer ersten Variante, welche bei einer Bestätigung der Sicherheitsbetrachtung näher betrachtet werden muss, wird aus dem ersten Telegramm T1 und aus dem zweiten Telegramm T2 das dritte Telegramm T3 wie folgt gebildet. Das erste Telegramm T1 und das zweite Telegramm T2 haben dabei folgenden Aufbau: Einen Bereich für Nutzdaten, einen Bereich für Statusmeldungen und einen beispielsweise 3-Byte breiten CRC-Prüfwert. Die Nutzdaten aus dem ersten Telegramm werden in das dritte Telegramm T3 übernommen und der CRC-Prüfwert aus dem zweiten Telegramm T2 wird in das dritte Telegramm T3 als Prüfwert übernommen. Diese Variante gilt als zertifizierungsrelevant, da sichergestellt werden muss, dass das dritte Telegramm T3, wie zuvor beschrieben, gebildet wird. Wenn das dritte Telegramm T3 dann derartig zusammengestellt wurde, kann es auf den Feldbus oder den Rückwandbus gegeben werden und somit zur F-Peripherie gesendet werden.

Eine zweite Variante ist folgende: Die in den Recheneinheiten 2 und 3 gebildeten Telegramme T1 und T2 werden über ein Bildungsgesetz, welches in den Recheneinheiten 2 und 3 definiert ist, gebildet und zum ersten Schnittstellenmodul 5 bzw. zum zweiten Schnittstellenmodul 4 gesendet. Das Bildungsgesetz ist beispielsweise in einem Funktionsbaustein innerhalb der Recheneinheiten implementiert. Die Telegramme sind wiederum, wie bereits oben erwähnt, aufgebaut. Wenn der Status des ersten Telegrammes T1 gleich ist mit dem Status des zweiten Telegrammes T2 so werden für das dritte Telegramm T3 die Nutzdaten plus dem Status aus dem ersten Telegramm T1 übernommen und für das dritte Telegramm T3 der CRC-Prüfwert aus dem zweiten Telegramm T2 übernommen. Diese Variante ist dann nicht zertifizierungsrelevant, da automatisch sichergestellt ist, dass ein korrektes drittes Telegramm T3 aus dem ersten Telegramm T1 und dem zweiten Telegramm T2 gebildet werden kann.

Ein fehlersicheres Automatisierungssystem lässt sich somit wie eine Art y-Adapter vor eine F-Peripherie schalten. Wobei der y-Adapter im Wesentlichen durch die Schnittstellenmodule mit je einer Schnittstelle zu den Recheneinheiten und einer Schnittstelle zu der F-Peripherie bzw. zu dem Feldbus ausgestaltet ist.

## Patentansprüche

1. Fehlersicheres Automatisierungssystem (1), umfassend
- eine erste Recheneinheit (2),
- ein erstes Schnittstellenmodul (4),
- ein zweites Schnittstellenmodul (5),
- eine Peripherie (6),
wobei die erste Recheneinheit (2) zum Datenaustausch eines ersten Telegramms (T1) mit dem ersten Schnittstellenmodul (4) über eine erste Datenleitung (7) verbunden ist,
wobei
die zweite Recheneinheit (3) zum Datenaustausch eines zweiten Telegramms (T2) mit dem zweiten Schnittstellenmodul (4) über eine zweite Datenleitung (8) verbunden ist,
wobei die Schnittstellenmodule (4, 5) derart ausgestaltet sind, dass das erste und das zweite Schnittstellenmodul (4, 5) zum Vergleich des ersten Telegramms (T1) mit dem zweiten Telegramm (T2) funktionell miteinander Wechselwirken und bei einer bestimmbaren Gleichheit der die Telegramme (T1, T2) aufweisenden Daten (10), die Daten (10) in einem dritten Telegramm (T3) an die Peripherie (6) übertragbar sind,
wobei das erste Schnittstellenmodul (4) erste Mittel (4c) zum Bilden eines Prüfwertes (12) für das dritte Telegramm (T3) aufweist und diese ausgestaltet sind
über das erste Schnittstellenmodul (4), welches das erste Telegramm T1 empfängt, und über das zweite Schnittstellenmodul (5), welches das zweite Telegramm (T2) empfängt, das dritte Telegramm (T3) zusammenzustellen, wobei das erste Schnittstellenmodul (4) die Daten (10) für das dritte Telegramm (T3) bereit stellt und das zweite Schnittstellenmodul (5) einen Prüfwert (12) aus dem zweiten Telegramm (T2) nimmt und ihn für das dritte Telegramm (T3) bereitstellt,
wodurch für das Erreichen einer Sicherheitsstufe eine erforderliche Hardware-Diversität durch die Funktionalität der Schnittstellenmodule (4, 5) erreicht ist.

2. Automatisierungssystem nach Anspruch 1, wobei das erste und das zweite Schnittstellenmodul (4, 5) auf einem Baugruppenträger (13) angeordnet sind.

3. Automatisierungssystem (1) nach Anspruch 2,
wobei Peripheriemodule (14, 15, 16), welche Teil der Peripherie (6) sind, auf dem Baugruppenträger (13) angeordnet sind.

4. Automatisierungssystem (1) nach einem der Ansprüche 1 bis 3, wobei die Recheneinheiten (2, 3) über einen Feldbus (17) mit den Schnittstellenmodulen (4, 5) verbunden sind.

5. Verfahren zur sicherheitsgerichteten Übertragung von Daten (10), wobei mit einer ersten Recheneinheit (2) ein erstes Telegramm (T1) an ein erstes Schnittstellenmodul (4) übertragen wird und mit einer zweiten Recheneinheit (3) ein zweites Telegramm (T2) an ein zweites Schnittstellenmodul (5) übertragen wird, wobei auf der ersten Recheneinheit (2) ein erstes Programm (20) und auf der zweiten Recheneinheit (3) ein zweites Programm (21) zum Bereitstellen von gleichen Daten (10) in das erste bzw. in das zweite Telegramm (T1, T2) abläuft,
wobei die Daten (10) in den funktionell miteinander Wechselwirkenden Schnittstellenmodulen (4, 5) miteinander verglichen werden und bei einer bestimmbaren Gleichheit in einem dritten Telegramm (T3) zu einer Peripherie (6) übertragen werden, wobei mittels des zweiten Schnittstellenmoduls (5) ein Prüfwert (12) aus dem zweietn Tekgrammm (T2) genommen wird und in das dritte Telegramm (T3) geschrieben wird und mittels des ersten Schnittstellenmoduls (4) die Daten (10) in das dritte Telegramm (T3) geschrieben werden, wodurch für das Erreichen einer Sicherheitsstufe einer erforderlichen Hardware-Diversität durch die Funktionalität der Schnittstellenmodule erreicht wird..

6. Verfahren nach Anspruch 5, wobei das erste und das zweite Programm (20, 21) jeweils zyklisch durchlaufen werden.

7. Verfahren nach einem der Ansprüche 5 oder 6, wobei bei Ungleichheit der Daten (10) die Peripherie (6) in einen sicheren Zustand geschaltet wird.

## Claims

1. Error-proof automation system (1), comprising
- a first processing unit (2),
- a first interface module (4),
- a second interface module (5),
- a periphery (6),
with the first processing unit (2) being connected to the first interface module (4) via a first data line (7) for data exchange of a first telegram (T1),
with the second processing unit (3) being connected to the second interface module (4) via a second data line (8) for data exchange of a second telegram (T2),
with the interface modules (4, 5) being embodied such that the first and the second interface module (4, 5), for comparison of the first telegram (T1) with the second telegram (T2), interact functionally with each other and with a definable equivalence of the data (10) comprising the telegrams (T1, T2), the data (10) is able to be transmitted in a third telegram (T3) to the periphery (6), wherein the first interface module (4) has first means (4c) for forming a check value (12) for the third telegram (T3) and these are embodied via the first interface module (4), which receives the first telegram T1, and via the second interface module (5), which receives the second telegram (T2), to assemble the third telegram (T3), with the first interface module (4) providing the data (10) for the third telegram (T3) and the second interface module (5) taking a check value (12) from the second telegram (T2) and providing it for the third telegram (T3), through which a required hardware diversity is achieved by the functionality of the interface modules (4, 5) for reaching a safety level.

2. Automation system according to claim 1, with the first and the second interface module (4, 5) being disposed on one module carrier (13).

3. Automation system (1) according to claim 2,
with periphery modules (14, 15, 16) which are part of the periphery (6) being disposed on the module carrier (13).

4. Automation system (1) according to one of claims 1 to 3, with the processing units (2, 3) being connected via a field bus (17) to the interface modules (4, 5).

5. Method for safety-oriented transmission of data (10), with a first telegram (T1) being transmitted with a first processing unit (2) to a first interface module (4) and with a second telegram (T2) being transmitted with a second processing unit (3) to a second interface module (5), with a first program (20) running on the first processing unit (2) and a second program (21) running on the second processing unit (3) for provision of the same data (10) in the first or in the second telegram (T1, T2), wherein the data (10) is compared in the interface modules (4, 5) interacting functionally with one another and, for a definable equivalence, is transmitted in a third telegram (T3) to a periphery (6), wherein a check value (12) is taken by means of the second interface module (5) from the second telegram (T2) and written into the third telegram (T3) and the data (10) is written into the third telegram (T3) by the first interface module (4), through which, for reaching a safety level, a required hardware diversity is achieved by the functionality of the interface modules.

6. Method according to claim 5, with the first and the second program (20, 21) being run cyclically in each case.

7. Method according to one of claims 5 or 6, with the periphery (6) being switched into a safe state if the data (10) is not the same.

## Revendications

1. Système ( 1 ) d'automatisation à l'épreuve des erreurs et comprenant
- une première unité informatique,
- un premier module ( 4 ) d'interface,
- un deuxième module ( 5 ) d'interface,
- une périphérie ( 6 ),
dans lequel la première unité ( 2 ) informatique est pour l'échange de données d'un premier télégramme ( T1 ), reliée au premier module ( 4 ) d'interface par une première ligne ( 7 ) de données,
dans lequel
la deuxième unité ( 3 ) informatique est, pour l'échange de données d'un deuxième télégramme ( T2 ), reliée au deuxième module ( 4 ) d'interface par une deuxième ligne ( 8 ) de données,
les modules ( 4, 5 ) d'interface étant tels que le premier et le deuxième modules ( 4, 5 ) d'interface s'influencent réciproquement l'un avec l'autre fonctionnellement pour la comparaison du premier télégramme ( T1 ) et du deuxième télégramme ( T2 ) et, lors d'une identité pouvant être déterminée des données ( 10 ) comportant les télégrammes ( T1, T2 ), les données ( 10 ) peuvent être transmises à la périphérie ( 6 ) dans un troisième télégramme ( T3 ),
dans lequel le premier module ( 4 ) d'interface comporte des premiers moyens ( 4c ) de formation d'une valeur ( 12 ) de contrôle pour le troisième télégramme ( T3 ) et ceux-ci sont tels que
par le premier module ( 4 ) d'interface qui reçoit le premier télégramme ( T1 ) et par le deuxième module ( 5 ) d'interface qui reçoit le deuxième télégramme ( T2 ), le troisième télégramme ( T3 ) est compilé, le premier module ( 4 ) d'interface mettant les données ( 10 ) à disposition pour le troisième télégramme ( T3 ) et le deuxième module ( 5 ) d'interface prenant une valeur ( 12 ) de contrôle du deuxième télégramme ( T2 ) et la mettant à disposition du troisième télégramme ( T3 ),
grâce à quoi on obtient, pour l'obtention d'un étage de sécurité, une diversité en matériel nécessaire par la fonctionnalité des modules ( 4, 5 ) d'interface.

2. Système d'automatisation suivant la revendication 1, dans lequel le premier et le deuxième modules ( 4, 5 ) d'interface sont disposés sur un porte-module ( 13 ).

3. Système d'automatisation suivant la revendication 2, dans lequel des modules ( 14, 15, 16 ) de périphérie qui font partie de la périphérie ( 6 ) sont disposés sur le porte-module ( 13 ).

4. Système d'automatisation suivant l'une des revendications 1 à 3, dans lequel les unités ( 2, 3 ) informatiques sont reliées aux modules ( 4, 5 ) d'interface par un bus ( 17 ) sur site.

5. Procédé de transmission sécurisée de données ( 10 ), dans lequel on transmet, par une première unité ( 2 ) informatique, un premier télégramme à un premier module ( 4 ) d'interface et on transmet, par une deuxième unité ( 3 ) informatique, un deuxième télégramme ( T2 ) à un deuxième module ( 5 ) d'interface, dans lequel sur la première unité ( 2 ) informatique se déroule un premier programme ( 20 ) et sur la deuxième unité ( 3 ) informatique se déroule un deuxième programme ( 21 ) pour la mise en disposition de mêmes données ( 10 ) dans le premier et respectivement dans le deuxième télégramme ( T1, T2 ), les données ( 10 ) étant comparées entre elles dans les modules ( 4, 5 ) d'interface agissant en coopération réciproque l'un avec l'autre fonctionnellement et étant, s'il y a une identité pouvant être déterminée, transmis à une périphérie ( 6 ) dans un troisième télégramme ( T3 ), dans lequel au moyen du deuxième module ( 5 ) d'interface, on écrit une valeur ( 12 ) de contrôle du deuxième télégramme ( T2 ) dans le troisième télégramme ( T3 ) et au moyen du premier module ( 4 ) d'interface, on écrit les données ( 10 ) dans le troisième télégramme ( T3 ), grâce à quoi on obtient pour obtenir un stade de sécurité une diversité en matériel nécessaire par la fonctionnalité des modules d'interface.

6. Procédé suivant la revendication 5, dans lequel on fait passer cycliquement respectivement le premier et le deuxième programme ( 20, 21 ).

7. Procédé suivant l'une des revendications 5 ou 6, dans lequel, s'il n'y a pas identité des données, on met la périphérie ( 6 ) dans un état sécurisé.
